# EUROPEAN PATENT SPECIFICATION

(11) **EP 2 859 928 B1**
(45) Date of publication and mention of the grant of the patent: **10.05.2017**
(21) Application number: 13382394.8
(22) Date of filing: 08.10.2013
(51) Int. Cl.: B01D 24/10, B01D 24/46

(54) **Method for filter backwashing**
Verfahren zur Filterrückspülung
Procédé de rétrolavage de filtre

(43) Date of publication of application: 15.04.2015
(73) Proprietor: Gidelmar, S.A., Montevideo (UY)
(72) Inventor: Serra Putellas, Teresa, 17071 ESPAÑA (ES); Colomer i Feliu, Jordi, 17071 ESPAÑA (ES)
(74) Representative: Temiño Ceniceros, Ignacio

(56) References cited:
- DE-A1- 2 432 443
- US-A- 4 187 175
- US-A1- 2004 020 870

## Description

### Field of the invention

The present invention relates to a method for filter backwashing, said filter being made up of a granular material that can be fluidized, by means of injecting a clean liquid flow rate through said granular material in a direction opposite the filtering direction, using during said backwashing a fluctuating flow rate during the backwashing cycle.

### State of the Art

The use of filters made of a granular material that can be fluidized for filtering liquids, such as sewage or contaminated water for example, is known. Said filters gradually retain contaminants in the gaps existing between the granules and end up getting clogged, so they require a periodic backwashing cycle in order to maintain their filtering properties.

Said backwashing cycles are also known and can include injecting a clean fluid into the filter in a direction opposite the filtering direction at a speed sufficient to bring said granular material to a fluidization or subfluidization state, thus releasing and entraining the contaminants out of the filter, as described in document US200420870, for example. Said fluidization state is a state in which the particles are entrained upwards at a speed equal to or greater than their sedimentation rate, thus achieving a state close to that of a suspension.

Document US20060027511 discloses a method to delay the clogging of the granular material of the filter, thus successfully delaying backwashing and obtaining water, energy and time savings. Said method comprises a filtering step followed by a backwashing step and consists of the inclusion of short pulses of water injected in a direction opposite the filtering direction, displacing part of the contaminants inside the filter without removing them from same, said short pulses of water being applied before each backwashing cycle, such that the displacement and a better distribution of the contaminants inside the granular material are achieved, but without reducing the concentration thereof. Said pulses do not make up a backwashing cycle since they do not remove contaminants from the filter.

Document US20040020870 also discloses the inclusion at the end of the backwashing cycle a final cleaning step to prevent a phenomenon known as ripening, which consists of, when restarting the filtering after a backwashing operation, the filtered water contains a contaminant concentration that is greater than the desired concentration, because the granular material has yet to settle correctly and the water from the backwashing contained inside the filter after said backwashing ends comes out mixed with the filtered water. To prevent said unwanted phenomenon, the mentioned document proposes injecting at the end of the backwashing a terminal clean water flow rate at a speed less than the minimum fluidization velocity of at least one fraction of the grain size distribution forming the granular material, and in an amount and time sufficient to displace all the water contained in the filter which has been injected during backwashing.

This method is not envisaged to reduce water or energy consumption, or to speed up the backwashing process, and it only proposes the inclusion of said terminal step at a constant flow rate and low speed at the end of said backwashing cycle, without mentioning how the transition between the backwashing flow rate and the terminal flow rate is carried out. Methods for backwashing a filter made up of a granular material using different flow rates are disclosed in US 4,187,175 and DE 2432443.

### Description of the Invention

The present invention contributes to solving the foregoing and other drawbacks by providing a method for filter backwashing , said filter being made up of a granular material that can be fluidized, by means of injecting an injection flow rate fluctuating between two values: a higher flow rate and a lower flow rate, said injection flow rate fluctuating a plurality of times during a backwashing cycle. This flow rate fluctuation allows removing contaminants from the granular material more quickly and thus saves water, energy and time. It also prevents the appearance of channels inside the granular material channeling or conducting the cleaning liquid, preventing the latter from going through the contaminated areas of the granular material, reducing system efficacy.

The mentioned higher flow rate and lower flow rate values establishing the fluctuation limits will be determined by the characteristics of the granular material making up the filter.

A backwashing cycle consists of injecting a clean liquid through said filter in a direction opposite the filtering direction, and of distributing said clean liquid more or less homogenously throughout the entire section of the filter by means of a plurality of backwashing inlets. The injected liquid will be discharged, after going through the entire thickness of the granular material, through backwashing outlets, entraining the contaminants therewith, as it is displaced by the new injected clean liquid.

Said backwashing cycle will be maintained long enough so that the contaminant concentration contained inside the filter drops to one-hundredth of the initial contaminant concentration existing before starting the backwashing cycle.

The mentioned higher cleaning flow rate provides a stream of clean liquid that is displaced through the granular material at a speed greater than the sedimentation rate of a top fraction of the grain size distribution forming the granular material of the filter, causing at least that fraction of the grain size distribution to enter a fluidization state. At the same time said speed will be less than the upward entrainment rate of the bottom fraction of the grain size distribution forming the granular material of the filter to the backwashing outlet, thus preventing the granular material forming the filter from being entrained out of the filter during said backwashing cycle.

On the other hand, the mentioned lower cleaning flow rate is less than the higher cleaning flow rate and provides a stream of clean liquid that is displaced through the granular material at a speed that can be greater than the sedimentation rate of the bottom fraction of the grain size distribution forming the granular material of the filter, causing at least said bottom fraction of the grain size distribution to enter a fluidization state.

Alternation between the higher flow rate and the lower flow rate occurs cyclically, that alternation being able to be regular or irregular, and being able to occur gradually and/or abruptly.

### Brief Description of the Drawings

The foregoing and other advantages and features will be better understood from the following detailed description of several embodiments in reference to the attached drawings which must be interpreted in an illustrative and non-limiting manner, in which:
Figure 1 shows a schematic section of a filter made of granular material during the filtering cycle;
Figure 2 shows a schematic section of a filter made of granular material during the backwashing cycle;

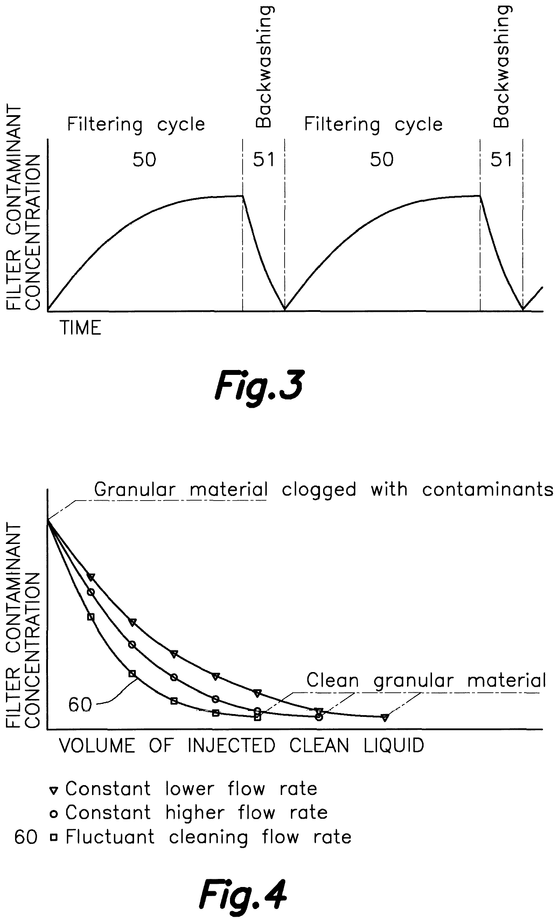

Figure 3 shows an illustrative graph without numerical values where the x-axis represents time, and y-axis represents the contaminant concentration in the granular material, showing the alternation between filtering cycles and backwashing cycles;
Figure 4 shows an illustrative graph without numerical values where the x-axis shows the volume of water injected into the filter during backwashing, and the y-axis shows the contaminant concentration in the granular material, comparing the results obtained by means of a first higher cleaning flow rate, by means of a lower cleaning flow rate, and by means of a cleaning flow rate fluctuating between said higher flow rate and said lower flow rate;
Figure 5a shows an example of the function that could determine the cleaning flow rate fluctuation between the higher flow rate and the lower flow rate, in this case with a symmetrical linear function;
Figure 5b shows an example of the function that could determine the cleaning flow rate fluctuation between the higher flow rate and the lower flow rate, in this case with an asymmetric linear function;

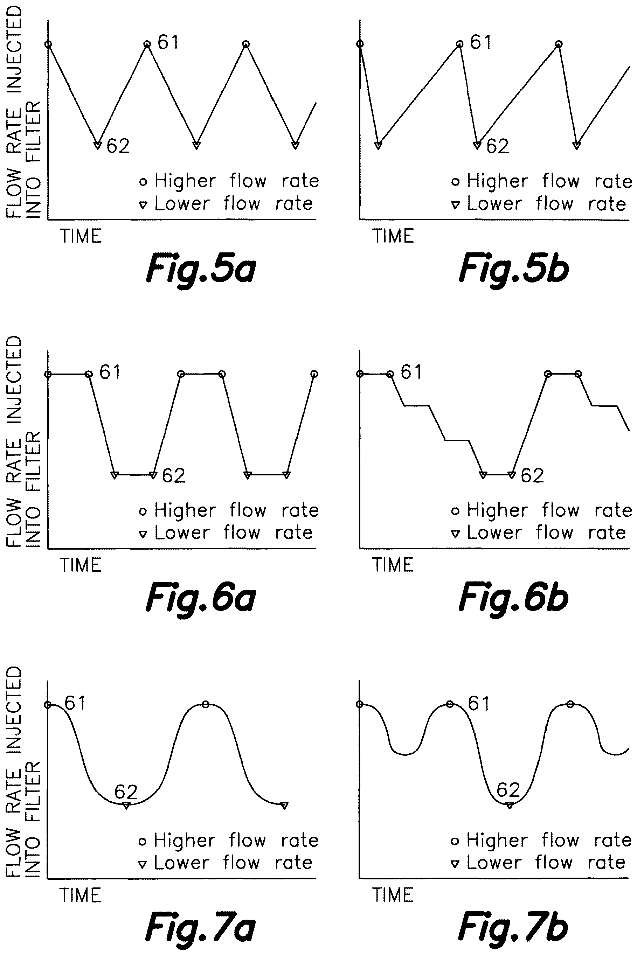

Figure 5a shows an example of the function that could determine the cleaning flow rate fluctuation between the higher flow rate and the lower flow rate, in this case with a symmetrical linear function;
Figure 6a shows an example of the function that could determine the cleaning flow rate fluctuation between the higher flow rate and the lower flow rate, in this case with a linear function with steps of constant flow rate at the start and at the end of each fluctuation, symmetrical;
Figure 6b shows an example of the function that could determine the cleaning flow rate fluctuation between the higher flow rate and the lower flow rate, in this case with a linear function with steps of constant flow rate at the start and at the end of each fluctuation with sections of constant flow rate intercalated between the higher flow rate and the lower flow rate;
Figure 7a shows an example of the function that could determine the cleaning flow rate fluctuation between the higher flow rate and the lower flow rate, in this case with a symmetrical sinusoidal function; and
Figure 7b shows an example of the function that could determine the cleaning flow rate fluctuation between the higher flow rate and the lower flow rate, in this case with a two-step sinusoidal function, one step with a lower fluctuation and the other with a higher fluctuation.

### Detailed Description of an Embodiment

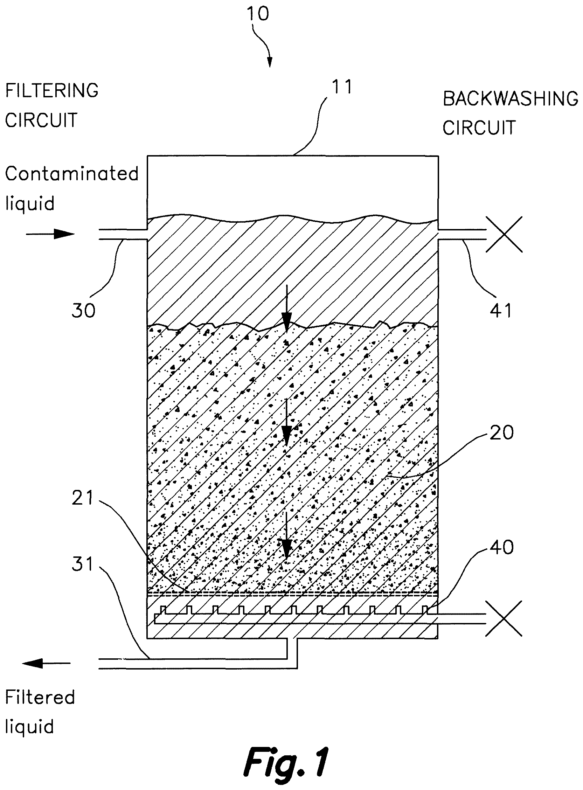

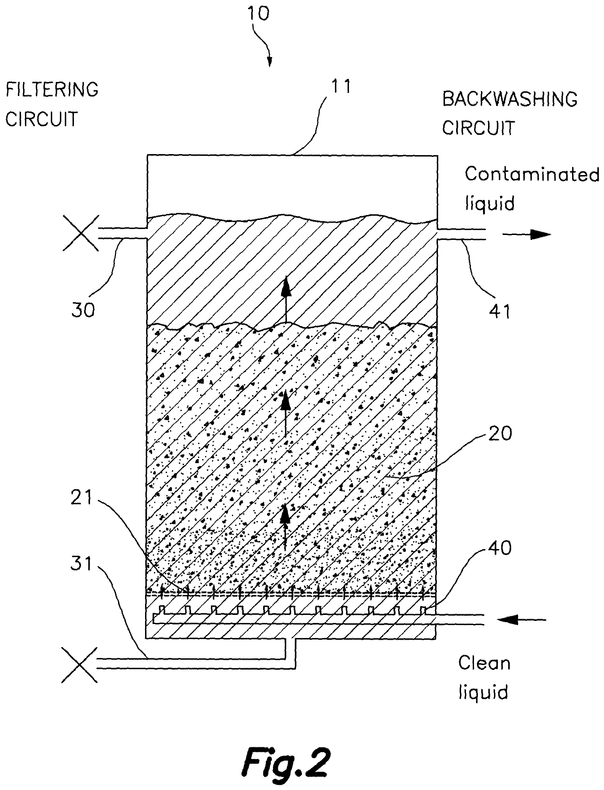

The attached Figures 1 and 2 show how, according to a preferred embodiment, the present invention comprises a container 11 containing the filter 10 made up of a granular material 20 that can be fluidized, made up according to a non-limiting example of sand, anthracite, activated carbon, plastic filter materials, ceramic filter materials, and/or glass.

In the upper part of said container 11 and above the fill level of said granular material 20, there is arranged at least one filtering inlet 30 (liquid to be filtered) where the contaminated liquid to be filtered inside the filter 10 during the filtering cycle 50 is introduced, and in the lower part of said filter 10, below the granular material 20 and separated from it by means of a membrane or sieve 21 permeable to the filtered liquid, but which prevents the passage of the granular material 20, there is arranged at least one filtering outlet 31 which collects the liquid that has gone through the filter 10 and removes it. Said arrangement provides the contaminated liquid to be filtered with a downward vertical filtering direction.

Likewise, said filter 10 will have backwashing inlets 40 envisaged in the lower part of the container 11 for introducing a clean liquid during the backwashing cycle 51 in order to eliminate the contaminants retained in the granular material 20. The clean liquid introduced through the backwashing inlets 40 must be discharged from the filter 10 after going through the granular material 20, thus being loaded with contaminant elements, said removal is performed through one or several backwashing outlets 41. Said arrangement provides the clean backwashing liquid with an upward vertical backwashing direction opposite the filtering direction.

Optionally, the backwashing inlets 40 and the filtering outlets 31 will be one and the same reversible conduit provided with valves, and similarly the backwashing outlets 41 and the filtering inlets 30 can also be one and the same reversible conduit provided with valves.

The method for backwashing a filter proposed in this invention will be described below.

During said backwashing cycle 51, a cleaning flow rate 60 will be injected in a first step through the backwashing inlets 40, and a terminal flow rate will be injected in a final step of said cycle through the same inlets. The cleaning flow rate 60 entrains the contaminants retained in the granular material 20 to the backwashing outlets for discharge from the filter, and the terminal flow rate displaces a fraction of the volume of liquid contained in the granular material 20 to discharge it, thus preparing the filter 10 for restarting the filtering cycle 50.

As it goes through the granular material 20, the terminal flow rate can provide in a non-limiting manner a stream of liquid that is displaced at a speed less than the sedimentation rate of the bottom fraction of the grain size distribution of the granular material of the filter, in other words, of the smaller granules, such that said stream is not sufficient to fluidize the granular material, thus allowing its deposition and stabilization before starting the filtering cycle 50.

The cleaning flow rate 60 is a variable flow rate fluctuating between at least two values, one of these values being a higher cleaning flow rate 61 and the other one of said values being a lower cleaning flow rate 62, said fluctuation being repeated a plurality of times during a backwashing cycle 51.

Since the higher cleaning flow rate 61 is injected through the granular material 20, it provides a stream that is displaced at a speed equal to or greater than the sedimentation rate of the top fraction of the grain size distribution of the granular material of the filter, such that it allows fluidizing the larger granules of the granular material. Said stream will also fluidize the smaller granules, and to prevent said smaller granules from being entrained out of the filter together with the contaminants, the speed provided by said higher cleaning flow rate 61 must not exceed the upward entrainment rate of the smaller granules to the backwashing outlet 41.

Since the lower cleaning flow rate 62 is injected through the granular material 20, it provides a stream that is displaced at a speed equal to or greater than the sedimentation rate of the bottom fraction of the grain size distribution of the granular material of the filter, such that it allows fluidizing the smaller granules of the granular material 20.

For some filter materials, the optimum higher flow rate 61 and lower flow rate 62 values for the correct backwashing of the contaminants contained in the filter 10 may not be sufficient to achieve the fluidization state of said granular material 20, but the use of a stream having a fluctuating flow rate will likewise be desirable.

The fluctuation between said two values 61, 62 can be carried out in many ways depending on the composition and grain size distribution of the granular material 20, as well as on grain roughness. These factors will determine the optimum way to carry out the fluctuation in each case. Said fluctuation can be a gradual or abrupt fluctuation, and in the event of a gradual fluctuation it can be linear or can be defined by a function, such as for example a sinusoidal function, a saw-tooth function, etc. The possibility that the fluctuation has sub-steps of a constant flow rate, or that the upper and/or lower limit of the fluctuation is, for some of the repeating cycles, any other value of those contained in the range existing between the higher flow rate 61 and the lower flow rate 62, or even outside of that range, is also contemplated.

The frequency with which the fluctuation is repeated will also depend on the characteristics of the granular material 20, but a range of between 0.5 seconds and 30 seconds has been established, a range comprised between 1 second and 15 seconds being preferred, and a fluctuation about every 4 seconds being considered optimum, greater water, energy and time savings being obtained in said interval during the backwashing cycle for a granular material 20 having a standard grain size distribution.

## Claims

1. A method for backwashing a filter for filtering liquids, said filter being made up of a granular material that can be fluidized, by means of at least one backwashing cycle (51) intercalated between filtering cycles (50), which comprises:
- injecting a clean liquid through said filter (10) in a first direction opposite the filtering direction;
- distributing said clean liquid homogenously throughout the entire section of said filter (10) by means of at least one backwashing inlet (40); and
- discharging said liquid through at least one backwashing outlet (41);
wherein during said backwashing cycle (51), a cleaning flow rate (60) is injected in a first step through the backwashing inlets (40), and a terminal flow rate is injected in a final step of said cycle trough the same inlets; and
**characterized in that**
the cleaning flow rate (60) entrains the contaminants retained in the granular material (20) to the backwashing outlets (41) for discharge from the filter (10), and the terminal flow rate displaces a fraction of the volume of liquid contained in the granular material (20) to discharge it, thus preparing the filter (10) for restarting the filtering cycle (50);
said terminal flow rate being selected to provide a stream of clean liquid that is displaced through the granular material at a speed less than the sedimentation rate of the bottom fraction of the grain size distribution forming the granular material (20) of the filter (10); and
wherein said cleaning flow rate (60) fluctuates during the backwashing cycle (51) between at least two values:
- a higher cleaning flow rate (61) that is injected through the granular material (20) providing a stream that is displaced at a speed equal to or greater than the sedimentation rate of the top fraction of the grain size distribution of the granular material of the filter and less than the upward entrainment rate of the bottom fraction of the grain size distribution forming the granular material (20) of the filter (10) to the backwashing outlet (41); and
- a lower cleaning flow rate (62), that is injected through the granular material (20) providing a stream of clean liquid that is displaced through the granular material (20) at a speed equal to or greater than the sedimentation rate of the bottom fraction of the grain size distribution forming the granular material (20) of the filter (10);
wherein said fluctuation being repeated a plurality of times during said backwashing cycle (51).

2. The method according to claim 1, **characterized in that** said fluctuation has a frequency of between 0.5 and 30 seconds, being able to include steps of constant flow rate.

3. The method according to claim 1, **characterized in that** said fluctuation has a frequency of between 1 and 15 seconds, being able to include steps of constant flow rate.

4. The method according to claim 1, **characterized in that** said fluctuation has a frequency of about 4 seconds, being able to include steps of constant flow rate.

5. The method according to claim 1, 2, 3 or 4, **characterized in that** said fluctuating backwashing cleaning flow rate (60) is maintained until the concentration of the contaminants contained in the filter (10) drops to one-hundredth of the initial content of contaminants contained in the filter (10) when starting the backwashing cycle (51).

6. The method according to any one of the preceding claims, **characterized in that** said fluctuation between the higher cleaning flow rate (61) and the lower cleaning flow rate (62) occurs gradually.

7. The method according to claim 6, **characterized in that** said gradual fluctuation is a periodic gradual fluctuation.

8. The method according to claim 7, **characterized in that** said periodic gradual fluctuation is defined by means of a function chosen from the following: linear function, saw-tooth function or sinusoidal function.

9. The method according to any one of the preceding claims, **characterized in that** said granular material (20) of the filter (10) is made up of at least one of the following granular materials (20): sand, anthracite, activated carbon, plastic filter materials, ceramic filter materials, and/or glass.

## Patentansprüche

1. Verfahren zur Rückspülung eines Filters zum Filtrieren von Flüssigkeiten, wobei der genannte Filter aus einem granulären Material zusammengesetzt ist, welches verflüssigt werden kann, mittels mindestens eines zwischen Filtrierungszyklen (50) zwischengeschalteten Rückspülungszyklus (51), welches Verfahren Folgendes umfasst:
- das Einspritzen einer sauberen Flüssigkeit durch den genannten Filter (10) in eine erste Richtung, die der Filtrierungsrichtung entgegengesetzt ist;
- das homogene Verteilen der genannten sauberen Flüssigkeit über den gesamten Schnitt des genannten Filters (10) mittels mindestens eines Rückspülungseinlasses (40); und
- das Abführen der genannten Flüssigkeit durch mindestens einen Rückspülungsauslass (41);
wobei während des genannten Rückspülungszyklus (51) in einem ersten Schritt einen Reinigungsdurchfluss (60) durch die Rückspülungseinlässe (40) eingespritzt wird, und in einem letzten Schritt des genannten Zyklus einen Enddurchfluss durch die gleichen Einlässe eingespritzt wird; und
**dadurch gekennzeichnet, dass**
der Reinigungsdurchfluss (60) die im granulären Material (20) zurückgehaltenen Verunreinigungen zu den Rückspülungsauslässen (41) mitnimmt, für deren Abführung aus dem Filter (10), und der Enddurchfluss eine Fraktion des Volumens der im granulären Material (20) enthaltene Flüssigkeit verdrängt, um diese abzuführen, so dass der Filter (10) für den Neustart des Filtrierungszyklus (50) vorbereitet wird;
wobei der genannte Enddurchfluss derart ausgewählt wird, dass er eine Strömung aus sauberer Flüssigkeit bereitstellt, welche durch das granuläre Material mit einer Geschwindigkeit verdrängt wird, welche kleiner als die Sedimentationsgeschwindigkeit der unteren Fraktion der Korngrößenverteilung ist, welche das granuläre Material (20) des Filters (10) bildet; und
wobei der genannte Reinigungsdurchfluss (60) während des Rückspülungszyklus (51) zwischen mindestens zwei Werten schwankt:
- einem höheren Reinigungsdurchfluss (61), welcher durch das granuläre Material (20) eingespritzt wird, so dass eine Strömung bereitgestellt wird, welche mit einer Geschwindigkeit zum Rückspülungsauslass (41) verdrängt wird, welche gleich oder größer als die Sedimentationsgeschwindigkeit der oberen Fraktion der Korngrößenverteilung des granulären Materials des Filters und kleiner als die aufwärts Mitnahmegeschwindigkeit der unteren Fraktion der Korngrößenverteilung ist, welche das granuläre Material (20) des Filters (10) bildet; und
- einem niedrigeren Reinigungsdurchfluss (62), welcher durch das granuläre Material (20) eingespritzt wird, so dass eine Strömung aus sauberer Flüssigkeit bereitgestellt wird, welche durch das granuläre Material (20) mit einer Geschwindigkeit verdrängt wird, welche gleich oder größer als die Sedimentationsgeschwindigkeit der unteren Fraktion der Korngrößenverteilung ist, welche das granuläre Material (20) des Filters (10) bildet;
wobei die genannte Schwankung mehrmals während des genannten Rückspülungszyklus (51) wiederholt wird.

2. Verfahren nach Anspruch 1, **dadurch gekennzeichnet, dass** die genannte Schwankung eine Frequenz zwischen 0,5 und 30 Sekunden aufweist, wobei es möglich ist, Schritte mit einem konstanten Durchfluss miteinzubeziehen.

3. Verfahren nach Anspruch 1, **dadurch gekennzeichnet, dass** die genannte Schwankung eine Frequenz zwischen 1 und 15 Sekunden aufweist, wobei es möglich ist, Schritte mit einem konstanten Durchfluss miteinzubeziehen.

4. Verfahren nach Anspruch 1, **dadurch gekennzeichnet, dass** die genannte Schwankung eine Frequenz von etwa 4 Sekunden aufweist, wobei es möglich ist, Schritte mit einem konstanten Durchfluss miteinzubeziehen.

5. Verfahren nach Anspruch 1, 2, 3 oder 4, **dadurch gekennzeichnet, dass** der genannte schwankende Rückspülungsreinigungsdurchfluss (60) solange gehalten wird, bis die Konzentration der im Filter (10) enthaltenden Verunreinigungen bis zu einem Hundertstel des anfänglichen Inhalts der im Filter (10) enthaltenden Verunreinigungen beim Beginn des Rückspülungszyklus (51) sinkt.

6. Verfahren nach einem der vorhergehenden Ansprüche, **dadurch gekennzeichnet, dass** die genannte Schwankung zwischen dem höheren Reinigungsdurchfluss (61) und dem niedrigeren Reinigungsdurchfluss (62) allmählich stattfindet.

7. Verfahren nach Anspruch 6, **dadurch gekennzeichnet, dass** die genannte allmähliche Schwankung eine periodische allmähliche Schwankung ist.

8. Verfahren nach Anspruch 7, **dadurch gekennzeichnet, dass** die genannte periodische allmähliche Schwankung mittels einer Funktion definiert wird, ausgewählt aus den Folgenden: einer linearen Funktion, einer Sägezahnfunktion oder einer sinusförmigen Funktion.

9. Verfahren nach einem der vorhergehenden Ansprüche, **dadurch gekennzeichnet, dass** das genannte granuläre Material (20) des Filters (10) aus mindestens einem der folgenden granulären Materialen (20) zusammengesetzt ist: Sand, Anthrazit, Aktivkohle, Kunststoff-Filtermaterialien, keramischen Filtermaterialien und/oder Glas.

## Revendications

1. Procédé de rétrolavage de filtre pour filtrer des liquides, ledit filtre étant compose d'une matière granulaire qui peut être fluidisée, par le biais d'au moins un cycle de rétrolavage (51) intercalé entre les cycles de filtrage (50), qui comprend :
- l'injection d'un liquide propre à travers ledit filtre (10) dans une première direction oppose à la direction de filtrage;
- la distribution dudit liquide propre de manière homogène tout le long de la section complète du dit filtre (10) par le biais d'au moins une entrée de rétrolavage (40); et
- la décharge dudit liquide à travers au moins une sortie de rétrolavage (41);
dans lequel pendant ledit cycle de rétrolavage (51), un débit de nettoyage (60) est injecté lors d'une première étape à travers les entrées de rétrolavage (40), et un débit terminal est injecté lors d'une étape finale dudit cycle à travers les mêmes entrées; et
**caractérisé en ce que**
le débit de nettoyage (60) entraîne les contaminants retenus dans la matière granulaire (20) vers les sorties de rétrolavage (41) pour leur décharge du filtre (10), et le débit terminal déplace une fraction du volume de liquide contenu dans la matière granulaire (20) pour la décharger, en préparant de la sorte le filtre (10) pour redémarrer le cycle de filtrage (50);
ledit débit terminal étant choisi pour fournir un courant de liquide propre qui est déplacé à travers la matière granulaire à une vitesse inférieure à la vitesse de sédimentation de la fraction de fond de la granulométrie formant la matière granulaire (20) du filtre (10); et
dans lequel ledit débit de nettoyage (60) fluctue pendant le cycle de rétrolavage (51) entre au moins deux valeurs:
- un débit de nettoyage supérieur (61) qui est injecté à travers la matière granulaire (20) fournissant un courant qui est déplacé a une vitesse supérieure ou égale à la vitesse de sédimentation de la fraction supérieure de la granulométrie de la matière granulaire du filtre et inférieure à la vitesse d'entraînement vers le haut de la fraction de fond de la granulométrie formant la matière granulaire (20) du filtre (10) vers la sortie de rétrolavage (41); et
- un débit de nettoyage inférieur (62), qui est injecté à travers la matière granulaire (20) fournissant un courant de liquide propre qui est déplacé à travers la matière granulaire (20) a une vitesse supérieure ou égale à la vitesse de sédimentation de la fraction de fond de la granulométrie formant la matière granulaire (20) du filtre (10);
dans lequel ladite fluctuation est répétée une pluralité de fois pendant ledit cycle de rétrolavage (51).

2. Procédé selon la revendication 1, **caractérisé en ce que** ladite fluctuation a une fréquence entre 0,5 et 30 secondes, étant apte à comporter des étapes de débit constant.

3. Procédé selon la revendication 1, **caractérisé en ce que** ladite fluctuation a une fréquence entre 1 et 15 secondes, étant apte à comporter des étapes de débit constant.

4. Procédé selon la revendication 1, **caractérisé en ce que** ladite fluctuation a une fréquence d'environ 4 seconds, étant apte à comporter des étapes de débit constant.

5. Procédé selon la revendication 1, 2, 3 ou 4, **caractérisé en ce que** ledit débit de nettoyage de rétrolavage fluctuant (60) est maintenu jusqu'à ce que la concentration des contaminants contenus dans le filtre (10) chute à un centième du contenu initial des contaminants contenus dans le filtre (10) lors du démarrage du cycle de rétrolavage (51).

6. Procédé selon l'une quelconque des revendications précédentes, **caractérisé en ce que** ladite fluctuation entre le débit de nettoyage supérieur (61) et le débit de nettoyage inférieur (62) a lieu de manière progressive.

7. Procédé selon la revendication 6, **caractérisé en ce que** ladite fluctuation progressive est une fluctuation périodique progressive.

8. Procédé selon la revendication 7, **caractérisé en ce que** ladite fluctuation périodique progressive est définie par le biais d'une fonction choisie parmi les suivantes: fonction linéaire, fonction en dents de scie ou fonction sinusoïdale.

9. Procédé selon l'une quelconque des revendications précédentes, **caractérisé en ce que** ladite matière granulaire (20) du filtre (10) est composé d'au moins une des matières granulaires suivantes (20): du sable, de l'anthracite, du charbon actif, des matières plastiques filtrantes, des matières céramiques filtrantes et/ou du verre.
